# EUROPEAN PATENT APPLICATION

(11) **EP 2 187 345 A1**
(43) Date of publication of application: **19.05.2010**
(21) Application number: 08291081.1
(22) Date of filing: 17.11.2008
(51) Int. Cl.: G06N 5/00

(54) **System and method for sharing virtual world experience in physical world**

(71) Applicant: Alcatel Lucent, 75008 Paris (FR)
(72) Inventor: Lou, Zhe, 2000 Antwerp (BE); van Broeck, Sigurd, 2980 Zoersel (BE)
(74) Representative: Narmon, Gisèle Marie Thérèse

(57) **Abstract**

A Story Construction Service (SCS) that allows to automatically record user's experience in a Virtual World, e.g. Second Life™ SL, and to construct a story in a customized style that can be deposited into a Web 2.0 service (W2S) such as Blog, myspace™, flickr™, youtube™, ... To this end, the Web 2.0 service is coupled to a Virtual World Server (VWS) via the Story Construction Service (SCS) and a Virtual World Recording Service (VWRS). The Virtual World Recording Service records activity parameters from the Virtual World Server and feeds them to the Story Construction Service that builds the story therewith and transmits this story to the web 2.0 service. The Story Construction Service (SCS) is further coupled to User Profiles Services (UPS) from which it receives user's preferences to build the customized story. The Story Construction Service greatly reduces user's effort on manual blogging while providing a different experience from the video recording and user's experiences on the Virtual World can be easily shared with others.

## Description

The present invention relates to a Story Construction Service adapted to build a story based on experience of a user connected to a Virtual World Server in a communication system.

Virtual World running on a Virtual World Server attracts more and more international attention via mainstream news media. One of the examples is Second Life™ SL launched in 2003. People start to dive into the Second Life™ SL to have new experience, which they probably want to share with not only friends inside the SL but also friends in the real world.

Today, the possibility for a user to share his experiences with others is to manually blog his activities in SL, just like writing diaries.

On the other hand, SL offers the possibility of recording on-screen actions. However, the disadvantages of this possibility are that it consumes a lot of resources and that the final recorded movie contains lots of useless segments.

An object of the present invention is to provide a Story Construction Service that allows to automatically record user's experience in a Virtual World, e.g. SL. and to construct a story in a customized style that can be deposited into a Web 2.0 service such as Blog, myspace™, flickr™, youtube™, ...

According to the invention, this object is achieved due to the fact that said user is associated to a Web 2.0 service coupled to said Virtual World Server via the cascade connection of said Story Construction Service and a Virtual World Recording Service, that said Virtual World Recording Service is adapted to record activity parameters from said Virtual World Server and to feed said activity parameters to said Story Construction Service, and that said Story Construction Service is adapted to build said story with the activity parameters received from said Virtual World Recording Service, and to transmit said story to said web 2.0 service.

In this way, user's experiences can be easily shared with others. The Story Construction Service greatly reduces user's effort on manual blogging while providing a different experience from the video recording.

In a preferred characterizing embodiment of the present invention, said Story Construction Service is further coupled to User Profiles Services adapted to store preferences of said user and to feed said user's preferences to said Story Construction Service, and said Story Construction Service is adapted to build said story based on the user's preferences received from said User Profiles Services.

By fetching the user's preferences from the User Profiles Services, the Story Construction Service gets to know that the user is for instance in favor of essay and that he likes to publish SL activities into his blog.

Another characterizing embodiment of the present invention is that said activity parameters comprise trail, script, multimedia, communication, location and time.

The Story Construction Service will interpret the trail and script, tag content with location and time and build a story based on the user's preferences or user-defined style. This automatically constructed story is then deposited into the web 2.0 service; e.g Blog, myspace™...

The present invention also relates to a method for recording activities of a user in a Virtual World application.

According to the present invention, said method comprises the steps of
- said user instructing a Story Construction Service to provide recording parameters to a Virtual World Recording Service,
- said Virtual World Recording Service recording activity parameters of said user in said Virtual World based on said recording parameters,
- said Virtual World Recording Service sending said activity parameters to said Story Construction Service.
- said Story Construction Service building a story by interpreting said activity parameters and publishing said story to a web 2.0 service associated to said user.

In this way, user's activities are easily recorded and available to be shared with others.

In a preferred characterizing embodiment of the present method, said Story Construction Service builds said story based on user's preferences received from User Profiles Services.

In this way, the story is not only build by means of the activity parameters of the user but is also based on his preferences including the fact that he likes to publish, e.g., SL activities into his blog.

Further characterizing embodiments of the present Story Construction Service as well as its associated method for sharing Virtual World experience in physical world are mentioned in the appended claims.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

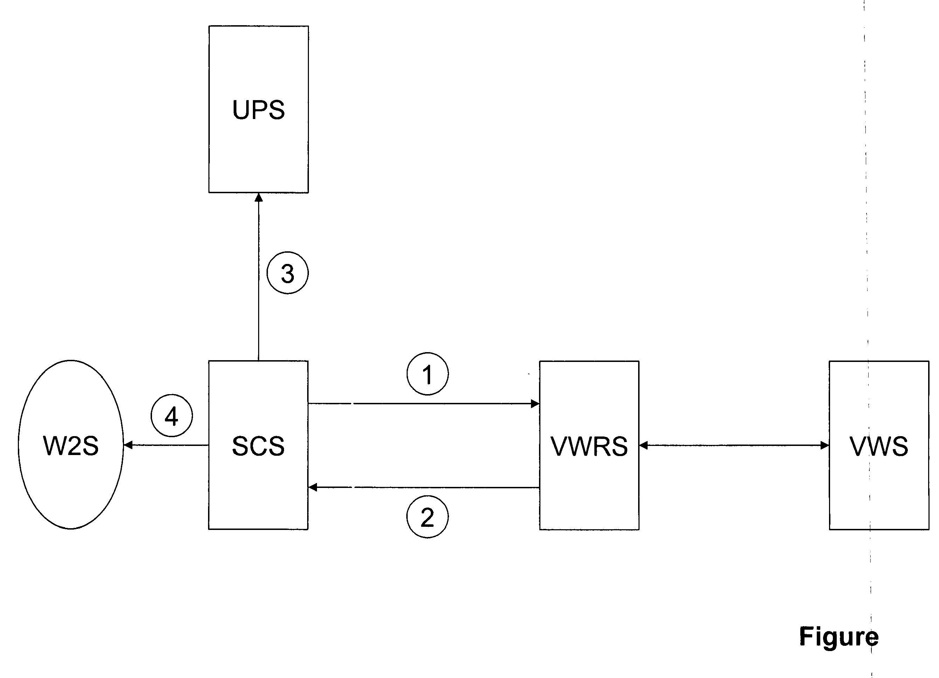

The above and other objects and features of the invention will become more apparent and the invention itself will be best understood by referring to the following description of an embodiment taken in conjunction with the accompanying drawings wherein the single Figure shows the message flow through the Story Construction Service SCS according to the invention.

The Story Construction Service SCS shown in the Figure is used, together with its associated Virtual World Recording Service VWRS and User Profiles Services UPS, to record user's or player's activities during an experience in a Virtual World running on a Virtual World Server VWS.

The devices providing these services belong to a communication system wherein the Story Construction Service SCS is coupled to Web 2.0 services whereon the user is associated, is linked to the Virtual World Server VWS through the Virtual World Recording Service VWRS and is further coupled to the User Profiles Services UPS. As will be explained below, the Story Construction Service SCS is capable of automatically recording virtual activities of the user and of constructing a story by interpreting and integrating records and publishing the story onto a Web 2.0 service. Examples of Web 2.0 services are Blog, myspace™, flickr™, youtube™, ...

In the communication system, the Virtual World Server provides Virtual World applications such as the well known Second Life™ SL.

If, as an example, the user wants to blog his virtual trip to a "City" in Second Life SL, he first instructs the SCS to provide (1) two recording parameters to the Virtual World Recording Service VWRS. These two recording parameters are the recording time and the reference of the Virtual World application, i.e. Second Life SL.

Based on these two parameters, the Virtual World Recording Service VWRS records, under the form of activity parameters collected from the Virtual World Server VWS, the user's activity in Second Life SL during the defined time period. These activity parameters representing the Virtual World activities of the user are recorded in terms of trail, script, multimedia, communication, location and time.

The Virtual World Recording Service VWRS then feed (2) the activity parameters back to the Story Construction Service SCS.

The Story Construction Service SCS then preferably fetches (3) the user's profile or user's preferences from the User Profiles Services UPS and gets to know that this user is, e.g., in favor of essay and that he likes to publish SL activities into his blog.

The Story Construction Service SCS interprets the trail and script, tag content with location and time and integrates all the received activity parameters into an essay by building a story that is published (4) onto the user's blog, i.e. deposited into the web 2.0 service W2S.

In more detail, the Story Construction Service SCS, provided with Web 2.0 interfaces, is adapted to perform the following operations:
- Scripts translation,
- Trail interpretation,
- Location, time tagging,
- Story construction, and
- Filtering based on the input from the user profile.

It is to be noted that the recording parameters in message flow (1) could include location, which indicates the Virtual World Recording Service VWRS to record all events related to this specific location.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. A Story Construction Service (SCS) adapted to build a story based on experience of a user connected to a Virtual World Server (VWS) in a communication system ***wherein*** said user is associated to a Web 2.0 service (W2S) coupled to said Virtual World Server (VWS) via the cascade connection of said Story Construction Service (SCS) and a Virtual World Recording Service (VWRS), said Virtual World Recording Service being adapted to record activity parameters from said Virtual World Server and to feed said activity parameters to said Story Construction Service, and said Story Construction Service (SCS) being adapted to build said story with the activity parameters received from said Virtual World Recording Service and to transmit said story to said web 2.0 service.

2. The Story Construction Service according to claim 1,
***characterized in that*** said Story Construction Service (SCS) is further coupled to User Profiles Services (UPS) adapted to store preferences of said user and to feed said user's preferences to said Story Construction Service,
***and in that*** said Story Construction Service is adapted to build said story based on the user's preferences received from said User Profiles Services.

3. The Story Construction Service according to claim 1, ***characterized in that*** said activity parameters comprise trail, script, multimedia, communication, location and time.

4. The Story Construction Service according to claim 1, ***characterized in that*** said Web 2.0 service (W2S) is such as Blog, myspace™, flickr™ or youtube™.

5. The Story Construction Service according to claim 1, ***characterized in that*** the Virtual World provided by said Virtual World Server (VWS) is Second Life SL.

6. A method for recording activities of a user in a Virtual World application, ***characterized in that*** said method comprises the steps of:
- said user instructing a Story Construction Service (SCS) to provide recording parameters to a Virtual World Recording Service (VWRS),
- said Virtual World Recording Service recording activity parameters of said user in said Virtual World based on said recording parameters,
- said Virtual World Recording Service sending said activity parameters to said Story Construction Service,
- said Story Construction Service building a story by interpreting said activity parameters and publishing said story to a web 2.0 service (W2S) associated to said user.

7. The method according to claim 6, ***characterized in that*** said Story Construction Service (SCS) builds said story based on user's preferences received from User Profiles Services (UPS).

8. The method according to claim 6, ***characterized in that*** said recording parameters are the recording time and the reference of said Virtual World application (SL).

9. The method according to claim 6, ***characterized in that*** said activity parameters comprise trail, script, multimedia, communication, location and time.
